# EUROPÄISCHE PATENTANMELDUNG

(11) **EP 0 712 747 A1**
(43) Veröffentlichungstag der Anmeldung: **22.05.1996**
(21) Anmeldenummer: 95118083.5
(22) Anmeldetag: 16.11.1995
(51) Int. Cl.: B60J 10/00, B60J 10/06, B60J 10/08

(54) **Dichtungsprofil mit metallischem Dekor**

(30) Priorität: 21.11.1994 DE 4441345
(71) Anmelder: METZELER Automotive Profiles GmbH, D-88131 Lindau (DE)
(72) Erfinder: Bonne, Andreas, D-88099 Neukirch (DE)
(74) Vertreter: Preissner, Nicolaus, Dipl.-Ing.

(57) **Zusammenfassung**

Die Erfindung betrifft ein Dichtungsprofil aus einem elastomeren Material, dessen Oberseite mit einem metallischen Dekor versehen ist.

Um den Montage- und Herstellungsaufwand zu verringern, wird gemäß der Erfindung vorgeschlagen, daß das Dichtungsprofil mindestens einen elektrisch leitfähigen Bereich (21) aufweist, der durch Zusatz eines leitfähigen Stoffes zur Gummimischung erhalten wurde. Das metallische Dekor ist als auf den elektrisch leitfähigen Bereich (21) aufgebrachte Metallbeschichtung (22) ausgebildet, die durch ein elektrochemisches Verfahren aufgebracht ist.

## Beschreibung

Die Erfindung bezieht sich auf ein Dichtungsprofil aus einem elastomeren Material, insbesondere hergestellt durch Extrusion, mit mindestens einem an der Oberfläche des Dichtungsprofiles vorgesehenen metallischen Dekor.

Aus der europäischen Patentschrift 0 182 318 ist ein Dichtungsprofil bekannt, das zur gleichzeitigen Abdichtung einer Türscheibe und des Dachbereiches einer Kraftfahrzeugtür ausgebildet ist. Das bekannte Dichtungsprofil ist durch Extrusion aus einem elastomeren Material hergestellt. An einer nach außen gewandten Stirnseite ist eine Zierleiste eingesetzt, die aus Metall, beispielsweise Edelstahl oder eloxiertem Aluminium, besteht. Eine derartige separat ausgebildete Zierleiste ist mit dem Nachteil verbunden, daß ein erhöhter Montage- und Herstellungsaufwand besteht. Dies schlägt sich dann in einem höheren Preis eines derartigen Dichtungsprofiles nieder.

Der Erfindung liegt deshalb die Aufgabe zugrunde, bei einem Dichtungsprofil der eingangs genannten Art den Montage- und Herstellungsaufwand zu reduzieren.

Zur Lösung dieser Aufgabe wird erfindungsgemäß vorgeschlagen, daß das Dichtungsprofil mindestens einen Bereich aufweist, der durch Zusatz eines leitfähigen Stoffes zur Gummimischung elektrisch leitfähig ist, und daß das metallische Dekor als auf den elektrisch leitfähigen Bereich aufgebrachte Metallbeschichtung ausgebildet ist, die durch ein elektrochemisches Verfahren aufgebracht ist.

Bei dem erfindungsgemäßen Dichtungsprofil entfällt eine separate Zierleiste oder dgl. zur Bildung des metallischen Dekors. Das metallische Dekor liegt als Metallbeschichtung vor, die auf einen elektrisch leitfähigen Bereich des Dichtungsprofiles mittels eines elektrochemischen Verfahrens aufgebracht ist. Hierdurch ist das metallische Dekor in das Dichtungsprofil integriert. Durch die Verringerung des Montage- und Herstellungsaufwandes ist das erfindungsgemäße Dichtungsprofil kostengünstig herstellbar. Darüberhinaus ist auch durch den Entfall einer separaten Zierleiste der Logistikaufwand verringert. Ein weiterer Vorteil des erfindungsgemäßen Dichtungsprofiles liegt darin, daß verschiedene Optiken des metallischen Dekors einfach herstellbar sind.

Vorteilhafte Ausgestaltungen der Erfindung sind in den Unteransprüchen aufgeführt.

Vorteilhaft ist in dem elektrisch leitfähigen Bereich der Gummimischung Ruß und/oder Metallpartikel und/oder Graphit zugesetzt. Der Zusatz dieser leitfähigen Stoffe erfolgt zweckmäßig in einem vorgeschalteten Fertigungsschritt zur Herstellung der Gummimischung.

In weiterer Ausgestaltung wird vorgeschlagen, daß die Metallbeschichtung aus Zinn und/oder Aluminium und/oder Chrom und/oder Zink besteht. Prinzipiell können als Beschichtung auf den elektrisch leitfähigen Bereich alle Materialien aufgebracht werden, die einem elektrochemischen Verfahren zugänglich sind.

In Weiterbildung wird vorgeschlagen, daß die Metallbeschichtung mehrere nacheinander aufgebrachte Metallschichten aufweist. Hierdurch sind Beschichtungen herstellbar, die verschiedenartige Optiken aufweisen oder an unterschiedliche Einsatzfälle angepaßt sind.

Hierbei kann eine auf den elektrisch leitfähigen Bereich aufgebrachte Basisbeschichtung aus Zinn bestehen, die dann mit mindestens einer weiteren Beschichtung, bestehend aus Aluminium und/oder Chrom und/oder Zink, überzogen ist.

Um ein metallisches Dekor mit verschiedenen Formgebungen zu erreichen, wird in Weiterbildung vorgeschlagen, daß das metallische Dekor eine Formgebung aufweist, die durch die Formgebung des leitfähigen Bereiches festlegbar ist.

Vorteilhaft ist die Metallbeschichtung durch Galvanisieren und/oder Eloxieren auf den elektrisch leitfähigen Bereich aufgebracht.

Weiterhin bezieht sich die vorliegende Erfindung auf ein Verfahren zur Herstellung eines Dichtungsprofiles, bei dem ein Dichtungsprofil aus einem elastomeren Material extrudiert wird. Erfindungsgemäß wird bei der Extrusion bereichsweise durch Zusatz eines leitfähigen Stoffes mindestens ein elektrisch leitfähiger Bereich gebildet, auf den nachfolgend mittels eines elektrochemischen Verfahrens mindestens eine Metallbeschichtung zur Bildung eines metallischen Dekors aufgebracht wird. Ein wesentlicher Vorteil des erfindungsgemäßen Verfahrens liegt darin, daß mit wenigen Verfahrensschritten und somit sehr kostengünstig ein Dichtungsprofil mit einem metallischen Dekor herstellbar ist.

Bei einer Weiterbildung des erfindungsgemäßen Verfahrens wird zunächst eine Basisbeschichtung aus Zink aufgebracht, die nachfolgend mit mindestens einer weiteren Metallbeschichtung überzogen wird, die aus Aluminium und/oder Chrom und/oder Zink besteht. Hierdurch wird ein besonders gut haftendes metallisches Dekor erzielt.

Vorteilhaft wird der Gummimischung zur Bildung des mindestens einen elektrisch leitfähigen Bereiches Ruß und/oder Metallpartikel und/oder Graphit im Extruder zugesetzt.

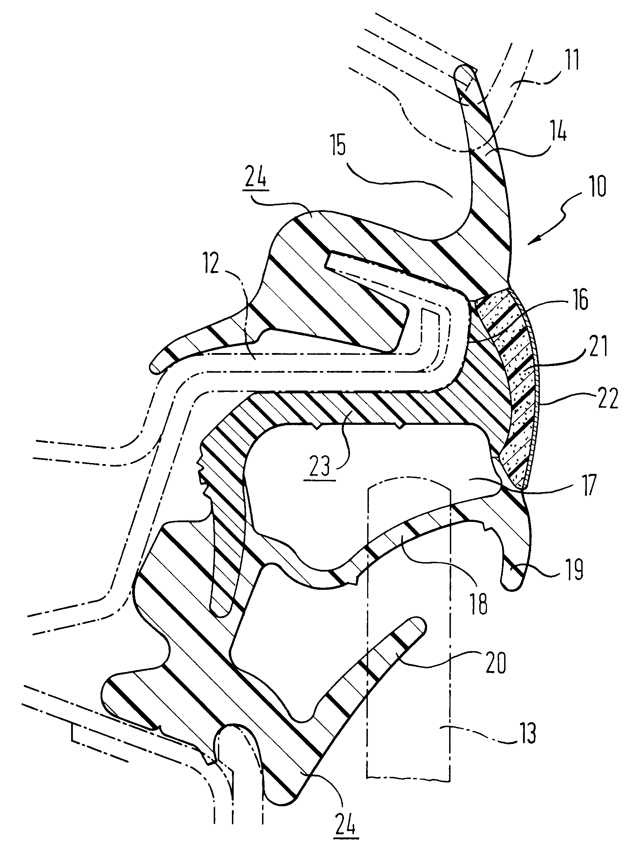

Nachfolgend wird die Erfindung anhand eines Ausführungsbeispieles näher erläutert, das in schematischer Weise in der Zeichnung dargestellt ist. Hierin zeigt die einzige Figur der Zeichnung einen Vertikalschnitt durch ein Dichtungsprofil, das zur gleichzeitigen Abdichtung einer Türscheibe und des Dachbereiches für eine Kraftfahrzeugtür dient.

Die einzige Figur der Zeichnung zeigt einen Vertikalschnitt im Dachbereich eines Kraftfahrzeuges durch das Dichtungsprofil 10. Wie aus der Zeichnung hervorgeht, ist das Dichtungsprofil 10 einteilig ausgebildet und an einem Türrahmen 12 einer nicht näher dargestellten Fahrzeugtür festgelegt. Die Fahrzeugtür ist mit einer versenkbaren Türscheibe 13 versehen, die in der Zeichnung strichpunktiert dargestellt ist.

Das durch Extrusion aus einem gummielastischen Material hergestellte Dichtungsprofil 10 weist einen Klemmbereich 16 auf, der zur Festlegung an dem Türrahmen 12 dient. Zur Abdichtung eines zwischen dem Türrahmen 12 und dem Dach 11 des Kraftfahrzeuges vorliegenden Spaltes 15 dient eine am Dichtungsprofil 10 ausgebildete Dichtlippe 11.

An den Klemmbereich 16 schließt sich eine Hohlkammer 17 an, die durch einen Steg 18 begrenzt ist. Der Steg 18 steht mit einer Dichtlippe 19 in Verbindung, die in der Schließstellung der Fensterscheibe 13 an deren Außenseite anliegt. Die Abdichtung der Innenseite der Fensterscheibe 13 erfolgt durch eine ebenfalls am Dichtungsprofil 10 integriert ausgebildete Dichtlippe 20.

In der Höhe des Klemmbereiches 16 weist das Dichtungsprofil 10 einen elektrisch leitfähigen Bereich 21 auf. Die elektrische Leitfähigkeit wurde dadurch erreicht, daß bei der Herstellung der Gummimischung ein elektrisch leitfähiger Stoff, insbesondere Ruß, zugesetzt wurde. Der leitfähige Bereich 21 wird durch Koextrusion erhalten. Zur Erhöhung der Leitfähigkeit können weiterhin auch Metallpartikel und/oder Graphit zugesetzt werden. In einem sich an die Extrusion des Gummiprofiles 10 anschließenden Verfahrensschritt wurde dann eine Metallbeschichtung 22 auf den elektrisch leitfähigen Bereich 21 aufgebracht. Die Metallbeschichtung 22 bildet somit ein metallisches Dekor für das Dichtungsprofil 10.

Das Dichtungsprofil 10 ist mit Bereichen unterschiedlicher Härte extrudiert. So ist ein Hartgummi-Bereich 23 und ein Weichgummi-Bereich 24 vorgesehen.

Zur Bildung der Metallbeschichtung 22 können verschiedenartige metallische Materialien zum Einsatz kommen. Bei dem Dichtungsprofil 10 wurde zunächst eine Basisbeschichtung bestehend aus Zinn auf die Oberfläche des elektrisch leitfähigen Bereiches 21 aufgebracht. Nachfolgend wurde diese Basisbeschichtung mit einer Metallbeschichtung aus Chrom überzogen. Prinzipiell kann die Metallbeschichtung 22 aus allen einem elektrochemischen Beschichtungsverfahren zugänglichen metallischen Materialien hergestellt sein.

Die Metallbeschichtung 22 kann unterschiedliche Formgebungen aufweisen, die durch die Formgebung des elektrisch leitfähigen Bereiches 21 festlegbar ist. Somit sind verschiedenartige Gestaltungen des metallischen Dekors in einfacher Weise herstellbar.

Durch die integrierte Ausbildung des metallischen Dekors wird neben einer sehr einfachen und kostengünstigen Herstellung auch eine besonders gute Haftung an dem Dichtungsprofil 10 erreicht.

Bei dem Herstellungsverfahren für das Dichtungsprofil 10 wird zunächst in einem ersten Verfahrensschritt das Dichtungsprofil extrudiert, wobei durch Zusatz eines leitfähigen Stoffes der elektrisch leitfähige Bereich 21 gebildet wird. In einem sich anschließenden Verfahrensschritt wird dann auf den elektrisch leitfähigen Bereich 21 die Metallbeschichtung 22 aufgebracht. Wie bereits erwähnt wurde, kann die Metallbeschichtung 22 mehrschichtig ausgebildet sein. Abschließend kann das metallische Dekor das vom Kunden gewünschte Finish erhalten.

Zur Bildung der Metallbeschichtung können verschiedenartige elektrochemische Verfahren eingesetzt werden. Insbesondere kann die Metallbeschichtung 22 durch Galvanisieren auf den elektrisch leitfähigen Bereich 21 aufgebracht werden.

## Patentansprüche

1. Dichtungsprofil aus einem elastomeren Material, insbesondere hergestellt durch Extrusion, mit mindestens einem an der Oberfläche des Dichtungsprofiles vorgesehenen metallischen Dekor, dadurch gekennzeichnet, daß das Dichtungsprofil (10) mindestens einen Bereich (21) aufweist, der durch Zusatz eines leitfähigen Stoffes zur Gummimischung elektrisch leitfähig ist, und daß das metallische Dekor als auf den elektrisch leitfähigen Bereich (21) aufgebrachte Metallbeschichtung (22) ausgebildet ist, die durch ein elektrochemisches Verfahren aufgebracht ist.

2. Dichtungsprofil nach Anspruch 1, dadurch gekennzeichnet, daß in dem elektrisch leitfähigen Bereich (21) der Gummimischung Ruß und/oder Metallpartikel und/oder Graphit zugesetzt ist.

3. Dichtungsprofil nach Anspruch 1 oder 2, dadurch gekennzeichnet, daß die Metallbeschichtung (22) aus Zinn und/oder Aluminium und/oder Chrom und/oder Zink besteht.

4. Dichtungsprofil nach einem der Ansprüche 1 bis 3, dadurch gekennzeichnet, daß die Metallbeschichtung (22) mehrere nacheinander aufgebrachte Metallschichten aufweist.

5. Dichtungsprofil nach Anspruch 4, dadurch gekennzeichnet, daß eine auf den elektrisch leitfähigen Bereich (21) aufgebrachte Basisbeschichtung aus Zinn besteht, die dann mit mindestens einer weiteren Beschichtung, bestehend aus Aluminium und/oder Chrom und/oder Zink, überzogen ist.

6. Dichtungsprofil nach einem der Ansprüche 1 bis 5, dadurch gekennzeichnet, daß das metallische Dekor eine Formgebung aufweist, die durch die Formgebung des elektrisch leitfähigen Bereiches (21) festlegbar ist.

7. Dichtungsprofil nach einem der Ansprüche 1 bis 6, dadurch gekennzeichnet, daß die Metallbeschichtung (22) durch Galvanisieren und/oder Eloxieren auf den elektrisch leitfähigen Bereich (21) aufgebracht ist.

8. Verfahren zur Herstellung eines Dichtungsprofiles nach einem der Ansprüche 1 bis 7, bei dem ein Dichtungsprofil aus einem elastomeren Material extrudiert wird, dadurch gekennzeichnet, daß bei der Extrusion bereichsweise durch Zusatz eines leitfähigen Stoffes mindestens ein elektrisch leitfähiger Bereich (21) gebildet wird, auf den nachfolgend mittels eines elektrochemischen Verfahrens mindestens eine Metallbeschichtung (22) zur Bildung eines metallischen Dekors aufgebracht wird.

9. Verfahren nach Anspruch 8, dadurch gekennzeichnet, daß zunächst eine Basisbeschichtung aus Zinn aufgebracht wird, die nachfolgend mit mindestens einer weiteren Metallbeschichtung überzogen wird, die aus Aluminium und/oder Chrom und/oder Zink besteht.

10. Verfahren nach Anspruch 8 oder 9, dadurch gekennzeichnet, daß der Gummimischung zur Bildung des mindestens einen elektrisch leitfähigen Bereiches (21) Ruß und/oder Metallpartikel und/oder Graphit im Extruder zugesetzt wird.
